# EUROPEAN PATENT SPECIFICATION

(11) **EP 4 317 726 B1**
(45) Date of publication and mention of the grant of the patent: **18.02.2026**
(21) Application number: 22780881.3
(22) Date of filing: 29.03.2022
(51) Int. Cl.: F16C 29/06

(54) **LINEAR MOTION GUIDE DEVICE**
FÜHRUNGSVORRICHTUNG FÜR LINEARE BEWEGUNG
DISPOSITIF DE GUIDAGE DE DÉPLACEMENT LINÉAIRE

(30) Priority: 31.03.2021 JP 2021059131
(43) Date of publication of application: 07.02.2024
(73) Proprietor: NSK Ltd., Tokyo 141-8560 (JP)
(72) Inventor: MIZUMURA, Yoshinori, Fujisawa-shi, Kanagawa 252-0811 (JP); KAWAKAMI, Kohichi, Fujisawa-shi, Kanagawa 252-0811 (JP)
(74) Representative: SSM Sandmair
(86) International application number: PCT/JP2022/015340
(87) International publication number: WO 2022/210670

(56) References cited:
- EP-B1- 0 124 648
- JP-A- 2006 153 155
- JP-A- 2006 153 155
- JP-A- 2007 303 556
- JP-A- 2007 303 556
- JP-A- 2008 175 263
- JP-A- 2008 175 263
- JP-A- 2020 070 876

## Description

### Field

The present disclosure relates to a linear motion guide device provided in a guide unit of a machine tool, a manufacturing device, a measuring instrument, or the like and configured to linearly move a moving member such as a table.

### Background

A linear motion guide device includes: a guide rail; a slider; and a large number of balls. The guide rail extends in an axial direction, and has ball rolling grooves on both side surfaces. The slider is disposed so as to straddle the guide rail. The slider includes a ball rolling groove, both ends of a ball return passage, and a direction changing passage for the balls. The ball rolling groove is located at a position facing the ball rolling groove of the guide rail. The ball return passage is formed in parallel to the ball rolling passage. The direction changing passage connects the ball rolling passage with both ends of the ball return passage. The balls are arranged in a ball circulation passage including the ball rolling groove of the guide rail, the ball rolling groove of the slider, the ball rolling passage, and the direction changing passage.

The slider includes a slider main body and an end cap. In the slider main body, the ball rolling groove and a ball return passage are formed. In the end cap, a direction changing passage is formed. The end cap is fixed to both end surfaces in the axial direction of the slider main body. In a technical field related to linear motion guide devices, a linear motion guide device including a slider main body having a return passage for a rolling element as disclosed in Patent Literature 1 is known. In Patent Literature 1, the return passage includes a through hole and a return guide member. The through hole is provided inside the slider main body. The return guide member is disposed in the through hole. Even in a case where the through hole has a large inner diameter, the return guide member disposed in the through hole enables a rolling element having a small diameter to roll in the return passage. Since it is unnecessary to reduce the inner diameter of the through hole, deterioration of workability in a case where a through hole is formed is inhibited.

JP 2006-153155 A discloses a linear motion guide device according to the preamble of claim 1.

### Citation List

### Patent Literature

Patent Literature 1: JP 2008-175263 A

### Summary

### Technical Problem

A return guide member disposed in a through hole eliminates the need for reducing the inner diameter of the through hole. When a decrease in size of a linear motion guide device is required, however, the inner diameter of the through hole is preferably small. There is a demand for a technique capable of smoothly putting a return guide member in a through hole even in a case where the through hole has a small inner diameter.

An object of the present disclosure is to provide a linear motion guide device that inhibits deterioration of workability in a case where a return guide member is disposed in a through hole and inhibits an increase in size.

### Solution to Problem

The invention is set out by the appended set of claims. The embodiments and/or examples of the following description which are not covered by the claims, are provided for illustrative purpose only and are only intended to assist the reader in understanding the present invention. However, such embodiments and/or examples which are not covered by the claims do not form part of the present invention that is solely defined by the claims. A linear motion guide device according to an embodiment of the present disclosure comprising: a guide rail; a slider that is guided by the guide rail in a first axis direction; and a rolling element allowed to roll in a circulation passage including: a rolling passage defined between the guide rail and the slider; a return passage provided inside the slider; and a direction changing passage connecting the rolling passage with the return passage, wherein the return passage includes: a through hole extending in the first axis direction inside the slider; and a return guide member disposed in the through hole, and the return guide member has, in a predetermined plane orthogonal to a central axis of the through hole: an outer surface having an arc shape facing a part of an inner peripheral surface of the through hole; an inner surface at least a part of which is in contact with the rolling element; a first end surface connecting one end of the outer surface with the inner surface in a peripheral direction of the central axis; and a second end surface connecting another end of the outer surface with the inner surface and separated from the first end surface, wherein the inner surface has, in the predetermined plane: an arcuate region; a first linear region connected to one end of the arcuate region in a peripheral direction of the central axis and extending in a tangential direction of the rolling element; and a second linear region connected to another end of the arcuate region and extending in a tangential direction of the rolling element.

According to this, a return guide member can be elastically deformed so as to have a smaller outer diameter by forming the return guide member such that the return guide member has a first end surface and a second end surface separated from the first end surface. This enables the return guide member to be inserted into a through hole while being elastically deformed even if the through hole has a small inner diameter. This inhibits deterioration of workability in a case where the return guide member is disposed in the through hole. Furthermore, since the inner diameter of the through hole can be reduced, an increase in size of the linear motion guide device is inhibited also in a case where a plurality of return passages is provided so as to be adjacent to each other in a predetermined plane, for example. Furthermore, excessively close contact of the inner surface of the return guide member with the rolling element is inhibited even in a case where the return guide member is elastically deformed so that the first end surface and the second end surface approach each other when the return guide member is disposed in the through hole. Therefore, the rolling element can smoothly roll inside the return guide member. Furthermore, when the return guide member is formed by a mold, the return guide member can be smoothly removed from the mold by providing a first linear region and a second linear region.

As a desirable embodiment of the linear motion guide device according to the present disclosure, the arcuate region may have a curvature smaller than a curvature of the rolling element in the predetermined plane.

According to this, excessively close contact of the inner surface of the return guide member with the rolling element is inhibited. Therefore, the rolling element can smoothly roll inside the return guide member.

As a desirable embodiment of the linear motion guide device according to the present disclosure, a contact point between the rolling element and the inner surface may be defined at at least one of a boundary between the arcuate region and the first linear region and a boundary between the arcuate region and the second linear region.

According to this, the rolling element can smoothly roll inside the return guide member while being supported by a part of the inner surface of the return guide member.

As a desirable embodiment of the linear motion guide device according to the present disclosure, the first linear region and the second linear region may be parallel to each other in the predetermined plane.

According to this, excessively close contact of the inner surface of the return guide member with the rolling element is inhibited even in a case where the return guide member is elastically deformed so that the first end surface and the second end surface approach each other when the return guide member is disposed in the through hole. Therefore, the rolling element can smoothly roll inside the return guide member. Furthermore, when the return guide member is formed by a mold, the return guide member can be smoothly removed from the mold by providing the first linear region and the second linear region in parallel to each other.

As a desirable embodiment of the linear motion guide device according to the present disclosure, the rolling element may be in contact with the inner peripheral surface between the first end surface and the second end surface.

According to this, the rolling element can smoothly roll through the return passage while being supported by each of the inner surface of the return guide member and the inner peripheral surface of the through hole.

As a desirable embodiment of the linear motion guide device according to the present disclosure, the outer surface may face a support region defined in at least half of the inner peripheral surface in a peripheral direction of the central axis.

According to this, the outer surface of the return guide member is supported by the support region of half or more of the inner peripheral surface of the through hole. Movement of the return guide member inside the through hole is thus inhibited after the return guide member is disposed in the through hole. Thus, the rolling element can smoothly roll inside the return guide member.

As a desirable embodiment of the linear motion guide device according to the present disclosure, the return passage may be provided outside the rolling passage with respect to a center of the slider in a second axis direction of the predetermined plane orthogonal to the first axis direction, and an opening between the first end surface and the second end surface may be disposed outside the central axis in the second axis direction.

According to this, a decrease in the turning radius at the time when the rolling element rolls in the direction changing passage between the return passage and the rolling passage is inhibited. Therefore, the rolling element can smoothly roll through the direction changing passage.

As a desirable embodiment of the linear motion guide device according to the present disclosure, the return guide member may include: a first return guide member; and a second return guide member connected to one end of the first return guide member in the first axis direction.

According to this, even in a case where the through hole has a large dimension in a first axis direction, the return guide member can be smoothly disposed in the through hole by inserting a first return guide member from one end of the through hole and inserting a second return guide member from the other end of the through hole.

As a desirable embodiment of the linear motion guide device according to the present disclosure, the slider may include: a slider main body provided with the through hole; an end cap connected to an end of the slider main body in the first axis direction; and a return guide disposed between the slider main body and the end cap so as to face the end cap, the direction changing passage may be defined between the end cap and the return guide, and the return guide member may be integrated with at least one of the return guide and the end cap.

According to this, the return guide member is integrated with at least one of a return guide and an end cap, so that the number of components of the linear motion guide device is reduced.

### Advantageous Effects of Invention

According to the present disclosure, there is provided a linear motion guide device that inhibits deterioration of workability in a case where a return guide member is disposed in a through hole and inhibits an increase in size.

### Brief Description of Drawings

FIG. 1 is a perspective view illustrating a linear motion guide device according to a first embodiment.
FIG. 2 is a front view in which a part of the linear motion guide device according to the first embodiment is broken.
FIG. 3 is a cross-sectional view illustrating a part of the linear motion guide device according to the first embodiment.
FIG. 4 is a perspective view schematically illustrating a return passage according to the first embodiment.
FIG. 5 is a cross-sectional view illustrating the return passage according to the first embodiment.
FIG. 6 is a cross-sectional view illustrating the return passage according to the second embodiment.
FIG. 7 is a cross-sectional view illustrating the return passage according to a third embodiment.
FIG. 8 is a perspective view schematically illustrating the return passage according to a fourth embodiment.
FIG. 9 is a plan view schematically illustrating the return passage according to a fifth embodiment.
FIG. 10 is a plan view schematically illustrating the return passage according to a sixth embodiment. Description of Embodiments

Although embodiments according to the present disclosure will be described below with reference to the drawings, the present disclosure is not limited thereto. Components of the embodiments to be described below can be appropriately combined. Furthermore, some components are not used in some cases.

In the embodiments, an XYZ orthogonal coordinate system is set, and the positional relation between respective parts will be described with reference to the XYZ orthogonal coordinate system. A direction parallel to an X-axis (first axis) in a horizontal plane is defined as an X-axis direction (first axis direction). A direction parallel to a Y-axis (second axis) in the horizontal plane orthogonal to the X-axis is defined as a Y-axis direction (second axis direction). A direction parallel to a Z-axis (third axis) orthogonal to the horizontal plane is defined as a Z-axis direction (third direction). A YZ plane is a predetermined plane including the Y-axis and the Z-axis, and is orthogonal to the X-axis.

### [First Embodiment]

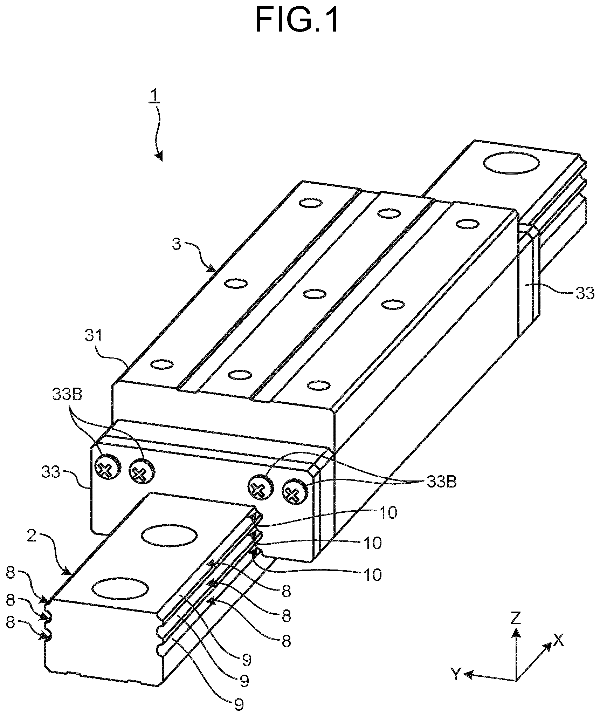

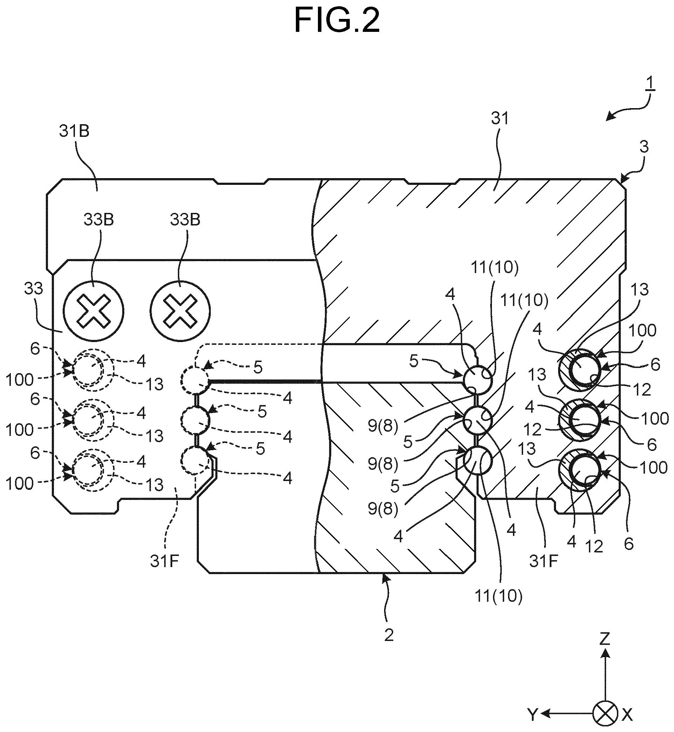

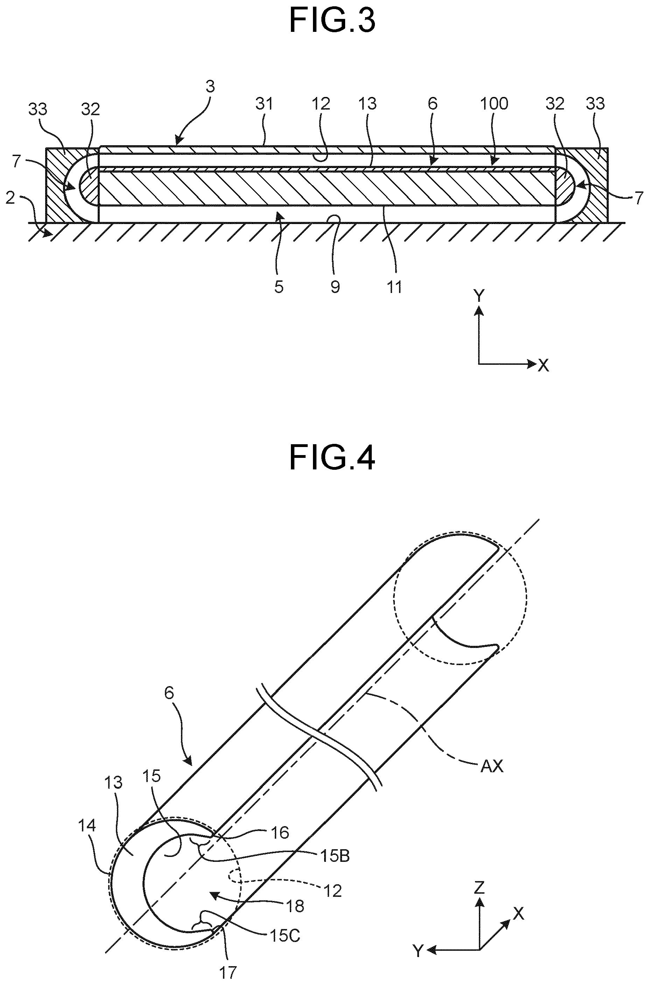

A first embodiment will be described. FIG. 1 is a perspective view illustrating a linear motion guide device 1 according to the embodiment. FIG. 2 is a front view in which a part of the linear motion guide device 1 according to the embodiment is broken. FIG. 3 is a cross-sectional view illustrating a part of the linear motion guide device 1 according to the embodiment.

As illustrated in FIGS. 1 and 2, the linear motion guide device 1 includes a guide rail 2, a slider 3, and rolling elements 4. The slider 3 is guided in the X-axis direction by the guide rail 2. The rolling elements 4 can roll in circulation passages 100. A circulation passage 100 includes a rolling passage 5, a return passage 6, and a direction changing passage 7. The rolling passage 5 is defined between the guide rail 2 and the slider 3. The return passage 6 is provided inside the slider 3. The direction changing passage 7 connects the rolling passage 5 with the return passage 6.

The guide rail 2 guides the slider 3 in the X-axis direction. The guide rail 2 extends in the X-axis direction. The guide rail 2 has rolling grooves 8 extending in the X-axis direction. At least a part of a rolling element 4 is disposed inside a rolling groove 8. The inner surface of the rolling groove 8 has a rolling surface 9 that supports the rolling element 4. The rolling element 4 rolls in contact with the rolling surface 9.

Three rolling grooves 8 are provided on a +Y side surface of the guide rail 2, and three rolling grooves 8 are provided on a -Y side surface of the guide rail 2. The three rolling grooves 8 are disposed in the Z-axis direction on the +Y side surface of the guide rail 2. The three rolling grooves 8 are disposed in the Z-axis direction on the -Y side surface of the guide rail 2.

The slider 3 moves relative to the guide rail 2 in the X-axis direction while being guided by the guide rail 2. At least a part of the slider 3 faces the guide rail 2 via the rolling element 4.

The slider 3 includes a slider main body 31, an end cap 33, and a return guide 32. The slider main body 31 extends in the X-axis direction. The end cap 33 is connected to an end of the slider main body 31 in the X-axis direction. The return guide 32 is disposed between the slider main body 31 and the end cap 33 so as to face the end cap 33. The slider main body 31 is made of metal. Each of the return guide 32 and the end cap 33 is made of synthetic resin. Note that one or both of the return guide 32 and the end cap 33 may be made of metal. For example, one or both of the return guide 32 and the end cap 33 may be made of iron, steel, stainless steel, or aluminum.

The slider main body 31 is disposed so as to straddle the guide rail 2. The slider main body 31 includes legs 31F and a body 31B. One leg 31F is disposed on the +Y side of the guide rail 2, and the other leg 31F is disposed on the -Y side of the guide rail 2. The body 31B is disposed on a +Z side of the guide rail 2, and connects the pair of legs 31F.

The slider main body 31 has rolling grooves 10 extending in the X-axis direction. The rolling grooves 10 of the slider main body 31 face the rolling grooves 8 of the guide rail 2. The rolling grooves 10 are formed on the inner surfaces of the legs 31F facing the guide rail 2. At least a part of the rolling element 4 is disposed inside a rolling groove 10. The inner surface of the rolling groove 10 has a rolling surface 11 that supports the rolling element 4. The rolling element 4 rolls in contact with the rolling surface 11.

Three rolling grooves 10 are provided on the inner surface of the leg 31F disposed on the +Y side of the guide rail 2, and three rolling grooves 10 are provided on the inner surface of the leg 31F disposed on the -Y side of the guide rail 2. Three rolling grooves 10 are disposed in the Z-axis direction on the inner surface of the leg 31F disposed on the +Y side of the guide rail 2. Three rolling grooves 10 are disposed in the Z-axis direction on the inner surface of the leg 31F disposed on the -Y side of the guide rail 2.

The rolling element 4 is a ball made of metal. A plurality of rolling elements 4 is provided. The rolling elements 4 can roll and pass through the circulation passage 100 including the rolling passage 5, the return passage 6, and the direction changing passage 7.

The rolling passage 5 is defined between the rolling surface 9 and the rolling surface 11. The rolling passage 5 extends in the X-axis direction between the guide rail 2 and the slider 3. The rolling element 4 can move in the X-axis direction while rolling through the rolling passage 5. The rolling element 4 rolls through the rolling passage 5 under load. Three rolling passages 5 are provided between the guide rail 2 and the leg 31F disposed on the +Y side of the guide rail 2. Three rolling passages 5 are provided between the guide rail 2 and the leg 31F disposed on the -Y side of the guide rail 2. The rolling element 4 rolls through the rolling passage 5 while being in contact with each of the rolling surface 9 and the rolling surface 11.

The return passage 6 is provided inside the slider main body 31. The return passage 6 extends in the X-axis direction inside the slider main body 31. The rolling element 4 can move in the X-axis direction while rolling through the return passage 6. The rolling element 4 rolls through the return passage 6 under no load. The return passage 6 is provided outside the rolling passage 5 with respect to the center of the slider 3 in the Y-axis direction. In the embodiment, the return passage 6 is provided inside the leg 31F. One return passage 6 is provided for one rolling passage 5. In the embodiment, six rolling passages 5 are provided. Six return passages 6 are also provided. The rolling passage 5 and the return passage 6 are substantially parallel to each other.

A traveling direction of the rolling element 4 moving through the rolling passage 5 is opposite to a traveling direction of the rolling element 4 moving through the return passage 6. When the rolling element 4 in the rolling passage 5 travels in a +X direction through the rolling passage 5, the rolling element 4 in the return passage 6 travels in a -X direction through the return passage 6. When the rolling element 4 in the rolling passage 5 travels in a -X direction through the rolling passage 5, the rolling element 4 in the return passage 6 travels in a +X direction through the return passage 6.

The direction changing passage 7 causes the rolling element 4 to roll and pass from one of the rolling passage 5 and the return passage 6 to the other. The direction changing passage 7 is defined between the end cap 33 and the return guide 32.

The end cap 33 is connected to each of a +X-side end and a -X-side end of the slider main body 31. The end cap 33 is fixed to the slider main body 31 by, for example, a bolt 33B. The return guide 32 is connected to each of the +X-side end and the -X-side end of the slider main body 31 so as to face the end cap 33.

The direction changing passage 7 is provided so as to connect the +X-side end of the rolling passage 5 with the +X-side end of the return passage 6. The direction changing passage 7 is provided so as to connect the -X-side end of the rolling passage 5 with the -X-side end of the return passage 6. The direction changing passage 7 has an arc shape connecting the end of the rolling passage 5 with the end of the return passage 6.

For example, the rolling element 4 that has moved in the +X direction through the rolling passage 5 and entered the direction changing passage 7 from the +X-side end of the rolling passage 5 can enter the return passage 6 from the +X-side end of the return passage 6 after moving through the direction changing passage 7. The rolling element 4 that has entered the return passage 6 from the +X-side end of the return passage 6 moves in the -X direction through the return passage 6. The rolling element 4 that has moved in the +X direction through the return passage 6 and entered the direction changing passage 7 from the +X-side end of the return passage 6 can enter the rolling passage 5 from the +X-side end of the rolling passage 5 after moving through the direction changing passage 7. The rolling element 4 that has entered the rolling passage 5 from the +X-side end of the rolling passage 5 moves in the -X direction through the rolling passage 5.

The rolling passage 5, the return passage 6, and the direction changing passage 7 form the circulation passage 100 of the rolling element 4. The rolling element 4 rolls so as to circulate through the circulation passage 100, so that the slider 3 can move relative to the guide rail 2 in each of the +X direction and the -X direction.

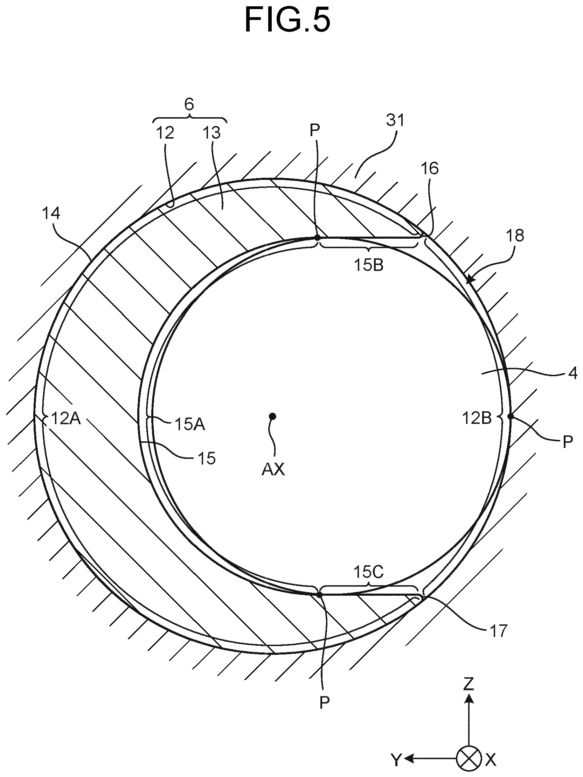

Next, the return passage 6 according to the embodiment will be described. FIG. 4 is a perspective view schematically illustrating the return passage 6 according to the embodiment. FIG. 5 is a cross-sectional view illustrating the return passage 6 according to the embodiment.

As illustrated in FIGS. 2, 3, 4, and 5, in the embodiment, the return passage 6 includes a through hole 12 and a return guide member 13. The through hole 12 extends in the X-axis direction inside the slider 3. The return guide member 13 is disposed in the through hole 12.

The through hole 12 is provided inside the slider main body 31. The through hole 12 extends in the X-axis direction inside the slider main body 31. A central axis AX of the through hole 12 is parallel to the X-axis. The central axis AX passes through the center of the through hole 12 in the YZ plane. The through hole 12 has a circular shape in the YZ plane orthogonal to the central axis AX. The through hole 12 has an inner peripheral surface disposed around the central axis AX.

As described above, the slider main body 31 is made of metal. The through hole 12 is formed in the slider main body 31 by using a tool such as a drill.

The return guide member 13 is disposed in the through hole 12. The return guide member 13 is made of synthetic resin. Note that the return guide member 13 may be made of rubber. An operator can elastically deform the return guide member 13 by manually applying force to the return guide member 13.

As illustrated in FIG. 5, the return guide member 13 has, in the YZ plane orthogonal to the central axis AX, an arc-shaped outer surface 14, an inner surface 15, a first end surface 16, and a second end surface 17. The outer surface 14 faces a part of the inner peripheral surface of the through hole 12. At least a part of the inner surface 15 is in contact with the rolling element 4. The first end surface 16 connects one end of the outer surface 14 with the inner surface 15 in a peripheral direction of the central axis AX. The second end surface 17 connects the other end of the outer surface 14 with the inner surface 15 in the peripheral direction of the central axis AX, and is separated from the first end surface 16. That is, in the embodiment, the return guide member 13 has an alphabet "C" shape in the YZ plane. An opening 18 is provided between the first end surface 16 and the second end surface 17.

The return guide member 13 has a cross section, parallel to the YZ plane, having a size and a shape uniform in the X-axis direction.

The outer surface 14 of the return guide member 13 is in contact with a part of the inner peripheral surface of the through hole 12 in the YZ plane. In the following description, a region, facing the outer surface 14 of the return guide member 13, of the inner peripheral surface of the through hole 12 is appropriately referred to as a support region 12A. Furthermore, in the following description, a region of the inner peripheral surface of the through hole 12 between the first end surface 16 and the second end surface 17 is appropriately referred to as an exposed region 12B.

The support region 12A is defined in at least half of the inner peripheral surface of the through hole 12 in the peripheral direction of the central axis AX. The support region 12A occupies a region of 51[%] or more and 99[%] or less of the inner peripheral surface of the through hole 12 in the peripheral direction of the central axis AX. In the example of FIG. 5, the support region 12A occupies a region of approximately 70[%] of the inner peripheral surface of the through hole 12 in the peripheral direction of the central axis AX.

The exposed region 12B is different from the region occupied by the support region 12A on the inner peripheral surface of the through hole 12. The exposed region 12B is disposed inside the opening 18. The rolling element 4 is in contact with at least a part of the exposed region 12B between the first end surface 16 and the second end surface 17.

The outer surface 14 of the return guide member 13 is in contact with the support region 12A. The return guide member 13 is not contact with the exposed region 12B.

The opening 18 between the first end surface 16 and the second end surface 17 is disposed outside the central axis AX with respect to the center of the slider 3 in the Y-axis direction. That is, the return guide member 13 is disposed in the through hole 12 such that the opening 18 faces outward with respect to the central axis AX. The support region 12A is defined at a position closer to the center of the slider 3 than the opening 18 and the exposed region 12B in the Y-axis direction.

The inner surface 15 of the return guide member 13 has, in the YZ plane, an arcuate region 15A, a first linear region 15B, and a second linear region 15C. The first linear region 15B is connected to one end of the arcuate region 15A in the peripheral direction of the central axis AX. The second linear region 15C is connected to the other end of the arcuate region 15A in the peripheral direction of the central axis AX.

The first linear region 15B extends in a tangential direction of the outer surface of the rolling element 4 in the YZ plane. The second linear region 15C extends in a tangential direction of the outer surface of the rolling element 4 in the YZ plane.

In the YZ plane, the first linear region 15B and the second linear region 15C are substantially parallel to each other.

In the YZ plane, the arcuate region 15A has a curvature smaller than that of the outer surface of the rolling element 4. In the YZ plane, the inner peripheral surface of the through hole 12 has a curvature smaller than that of the arcuate region 15A.

The rolling element 4 is in contact with the inner surface 15 at a contact point P defined on a part of the inner surface 15 of the return guide member 13. The rolling element 4 is in contact with the inner peripheral surface of the through hole 12 at the contact point P defined on a part of the inner peripheral surface of the through hole 12. In the embodiment, the contact point P between the rolling element 4 and the inner surface 15 of the return guide member 13 is defined at each of the boundary between the arcuate region 15A and the first linear region 15B and the boundary between the arcuate region 15A and the second linear region 15C. That is, the rolling element 4 rolls while being in contact with each of the boundary between the arcuate region 15A and the first linear region 15B and the boundary between the arcuate region 15A and the second linear region 15C. In the embodiment, the rolling element 4 is not in contact with the arcuate region 15A.

The contact point P between the rolling element 4 and the inner peripheral surface of the through hole 12 is defined in the exposed region 12B.

Note that, when being in contact with the boundary between the arcuate region 15A and the first linear region 15B, the rolling element 4 may be separated from the boundary between the arcuate region 15A and the second linear region 15C. Note that, when being in contact with the boundary between the arcuate region 15A and the second linear region 15C, the rolling element 4 may be separated from the boundary between the arcuate region 15A and the first linear region 15B. Note that the rolling element 4 may be in contact with a part of the arcuate region 15A.

Furthermore, a gap may be provided between the rolling element 4 and the inner surface 15 of the return guide member 13 and between the rolling element 4 and the inner peripheral surface of the through hole 12. That is, although, in the example of FIG. 5, three contact points P are provided around the rolling element 4, one contact point P may be provided. Furthermore, a slight gap may be provided between the rolling element 4 and the return passage 6. The rolling element 4 may roll through the return passage 6 in a state of being in contact with neither the boundary between the arcuate region 15A and the first linear region 15B nor the boundary between the arcuate region 15A and the second linear region 15C.

The distance between the contact point P defined at the boundary between the arcuate region 15A and the first linear region 15B and the contact point P defined at the boundary between the arcuate region 15A and the second linear region 15C is the same as or slightly larger than the diameter of the rolling element 4. The rolling element 4 can roll inside the return guide member 13 under no load.

Next, a method of assembling the slider 3 according to the embodiment will be described. The through hole 12 is formed in the slider main body 31 by a tool such as a drill. The return guide member 13 is manufactured by, for example, injection molding. The operator inserts the return guide member 13 into the through hole 12. The return guide member 13 has the first end surface 16 and the second end surface 17. The operator can elastically deform the return guide member 13 so that the first end surface 16 and the second end surface 17 approach each other to decrease the outer diameter of the return guide member 13 by manually applying force to the return guide member 13. The operator can smoothly insert the return guide member 13 into the through hole 12 with the return guide member 13 being elastically deformed.

After the return guide member 13 is inserted into the through hole 12, the operator connects the return guide 32 and the end cap 33 to an end of the slider main body 31 in the X-axis direction. This causes the direction changing passage 7 to be formed in the slider 3.

As described above, according to the embodiment, the return guide member 13 can be elastically deformed so as to have a smaller outer diameter by forming the return guide member 13 such that the return guide member 13 has the first end surface 16 and the second end surface 17 separated from the first end surface 16. This enables the operator to insert the return guide member 13 into the through hole 12 while elastically deforming the return guide member 13 even if the through hole 12 has a small inner diameter. This inhibits deterioration of workability in a case where the return guide member 13 is disposed in the through hole 12. Furthermore, since the inner diameter of the through hole 12 can be reduced, an increase in size of the linear motion guide device 1 is inhibited also in a case where a plurality of return passages 6 is provided so as to be adjacent to each other in the YZ plane.

The inner surface 15 of the return guide member 13 has, in the YZ plane, an arcuate region 15A, a first linear region 15B, and a second linear region 15C. The first linear region 15B is connected to one end of the arcuate region 15A in the peripheral direction of the central axis AX, and extends in the tangential direction of the rolling element 4. The second linear region 15C is connected to the other end of the arcuate region 15A, and extends in the tangential direction of the rolling element 4. This inhibits contact of the first linear region 15B and the second linear region 15C with the rolling element 4 even in a case where the return guide member 13 is elastically deformed so that the first end surface 16 and the second end surface 17 approach each other when the return guide member 13 is disposed in the through hole 12. Excessively close contact of the inner surface 15 of the return guide member 13 with the rolling element 4 can thus be inhibited. Therefore, the rolling element 4 can smoothly roll inside the return guide member 13. Furthermore, when the return guide member 13 is formed by injection molding, the return guide member 13 can be smoothly removed from a mold by providing the first linear region 15B and the second linear region 15C.

In the YZ plane, the arcuate region 15A has a curvature smaller than that of the rolling element 4. This inhibits excessively close contact of the inner surface 15 of the return guide member 13 with the rolling element 4. Therefore, the rolling element 4 can smoothly roll inside the return guide member 13.

The contact point P between the rolling element 4 and the inner surface 15 of the return guide member 13 is defined at at least one of the boundary between the arcuate region 15A and the first linear region 15B and the boundary between the arcuate region 15A and the second linear region 15C. This enables the rolling element 4 to smoothly roll inside the return guide member 13 while being supported by a part of the inner surface 15 of the return guide member 13.

In the YZ plane, the first linear region 15B and the second linear region 15C are parallel to each other. This inhibits contact of the first linear region 15B and the second linear region 15C with the rolling element 4 even in a case where the return guide member 13 is elastically deformed so that the first end surface 16 and the second end surface 17 approach each other when the return guide member 13 is disposed in the through hole 12. Excessively close contact of the inner surface 15 of the return guide member 13 with the rolling element 4 can thus be inhibited. Therefore, the rolling element 4 can smoothly roll inside the return guide member 13. Furthermore, when the return guide member 13 is formed by injection molding, the return guide member 13 can be smoothly removed from a mold by providing the first linear region 15B and the second linear region 15C in parallel to each other.

The rolling element 4 is in contact with the exposed region 12B of the through hole 12 between the first end surface 16 and the second end surface 17. This enables the rolling element 4 to smoothly roll through the return passage 6 while being supported by each of the inner surface 15 of the return guide member 13 and the inner peripheral surface of the through hole 12.

The outer surface 14 of the return guide member 13 faces the support region 12A defined in at least half of the inner peripheral surface of the through hole 12 in the peripheral direction of the central axis AX. This causes the outer surface 14 of the return guide member 13 to be supported by the support region 12A of half or more of the inner peripheral surface of the through hole 12. Movement of the return guide member 13 inside the through hole 12 is thus inhibited after the return guide member 13 is disposed in the through hole 12. Thus, the rolling element 4 can smoothly roll inside the return guide member 13.

The return passage 6 is provided outside the rolling passage 5 with respect to the center of the slider 3 in the Y-axis direction. The opening 18 between the first end surface 16 and the second end surface 17 is disposed outside the central axis AX in the Y-axis direction. This inhibits a decrease in the turning radius at the time when the rolling element 4 rolls in the direction changing passage 7 between the return passage 6 and the rolling passage 5. Therefore, the rolling element 4 can smoothly roll through the direction changing passage 7.

### [Second Embodiment]

A second embodiment will be described. In the following description, components same as or equivalent to those of the above-described embodiment are denoted by the same reference signs, and the description thereof will be simplified or omitted.

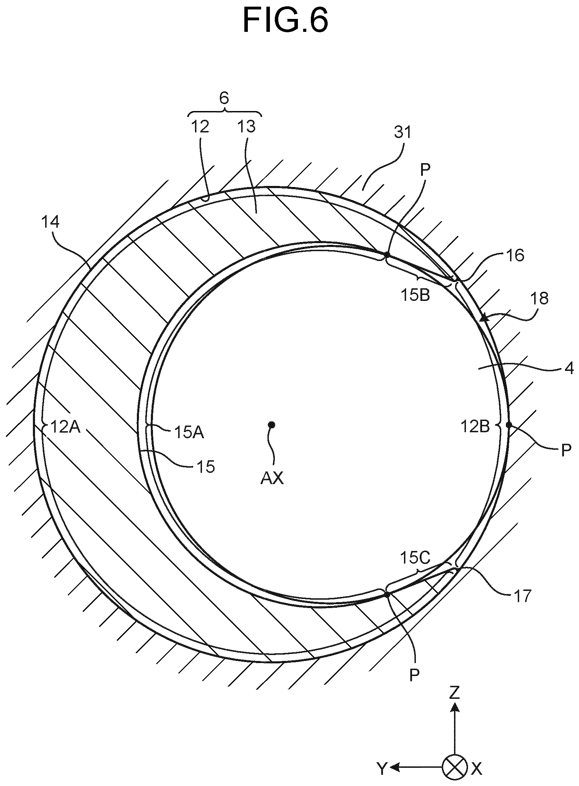

FIG. 6 is a cross-sectional view illustrating the return passage 6 according to the embodiment. As illustrated in FIG. 6, in the YZ plane, the first linear region 15B and the second linear region 15C may be inclined such that the distance between the first linear region 15B and the second linear region 15C decreases outward from the center of the slider 3 in the Y-axis direction.

The contact point P between the rolling element 4 and the inner surface 15 of the return guide member 13 is defined at each of the boundary between the arcuate region 15A and the first linear region 15B and the boundary between the arcuate region 15A and the second linear region 15C.

Also in the embodiment, deterioration of workability in a case where the return guide member 13 is disposed in the through hole 12 is inhibited, and an increase in size of the linear motion guide device 1 is inhibited.

### [Third Embodiment]

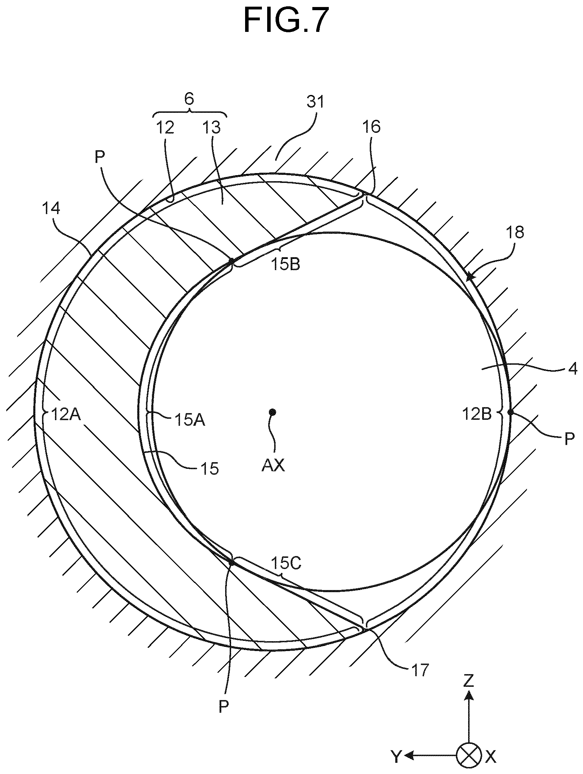

FIG. 7 is a cross-sectional view illustrating the return passage 6 according to the embodiment. As illustrated in FIG. 7, in the YZ plane, the first linear region 15B and the second linear region 15C may be inclined such that the distance between the first linear region 15B and the second linear region 15C increases outward from the center of the slider 3 in the Y-axis direction.

The contact point P between the rolling element 4 and the inner surface 15 of the return guide member 13 is defined at each of the boundary between the arcuate region 15A and the first linear region 15B and the boundary between the arcuate region 15A and the second linear region 15C.

Also in the embodiment, deterioration of workability in a case where the return guide member 13 is disposed in the through hole 12 is inhibited, and an increase in size of the linear motion guide device 1 is inhibited.

### [Fourth Embodiment]

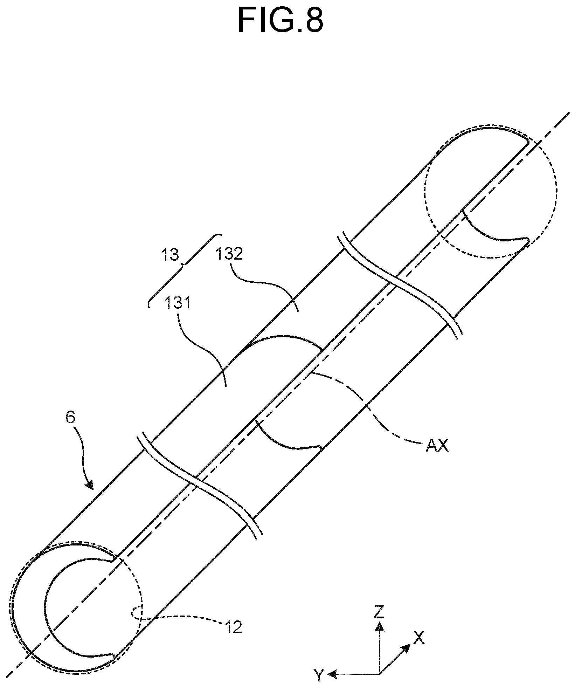

FIG. 8 is a perspective view schematically illustrating the return passage 6 according to the embodiment. As illustrated in FIG. 8, the return guide member 13 may include a first return guide member 131 and a second return guide member 132 connected to an end of the first return guide member 131 in the X-axis direction. That is, the return guide member 13 may be formed by combining a plurality of members.

According to the embodiment, even in a case where the through hole 12 has a large dimension in the X-axis direction, the return guide member 13 can be smoothly disposed in the through hole 12 by inserting the first return guide member 131 from one end of the through hole 12 and inserting the second return guide member 132 from the other end of the through hole 12.

### [Fifth Embodiment]

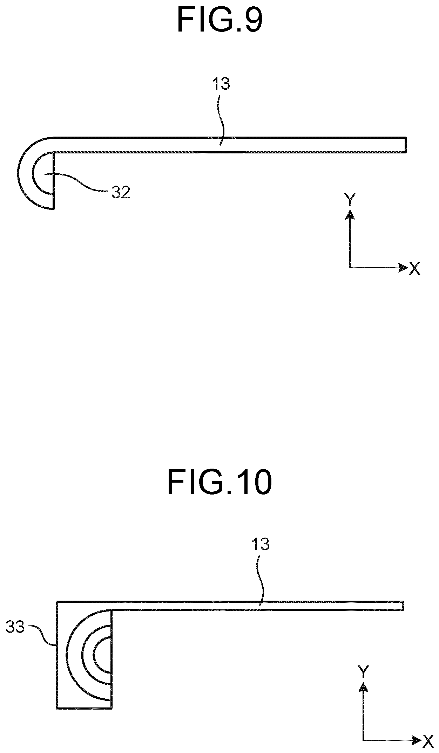

FIG. 9 is a plan view schematically illustrating the return passage 6 according to the embodiment. As illustrated in FIG. 9, the return guide member 13 may be integrated with the return guide 32. When each of the return guide member 13 and the return guide 32 is made of synthetic resin, the return guide member 13 and the return guide 32 may be formed by injection molding such that the return guide member 13 and the return guide 32 are integrally molded by using a single mold. According to the embodiment, the number of components of the linear motion guide device 1 can be reduced.

### [Sixth Embodiment]

FIG. 10 is a plan view schematically illustrating the return passage 6 according to the embodiment. As illustrated in FIG. 10, the return guide member 13 may be integrated with the end cap 33. When each of the return guide member 13 and the end cap 33 is made of synthetic resin, the return guide member 13 and the end cap 33 may be formed by injection molding such that the return guide member 13 and the end cap 33 are integrally molded by using a single mold. Also in the embodiment, the number of components of the linear motion guide device 1 can be reduced.

### [Other Embodiments]

In the above-described embodiment, the return guide member 13 is disposed in the through hole 12 such that the opening 18 between the first end surface 16 and the second end surface 17 faces outward with respect to the center of the slider 3. The return guide member 13 may be disposed in the through hole 12 such that the opening 18 faces the center of the slider 3. The return guide member 13 may be disposed in the through hole 12 such that the opening 18 faces the +Z direction. The return guide member 13 may be disposed in the through hole 12 such that the opening 18 faces the -Z direction.

In the above-described embodiment, the opening 18 is formed between the first end surface 16 and the second end surface 17 with the return guide member 13 being disposed in the through hole 12. The first end surface 16 and the second end surface 17 may be in contact with each other with the return guide member 13 being disposed in the through hole 12. That is, the support region 12A may occupy a region of approximately 100[%] of the inner peripheral surface of the through hole 12 in the peripheral direction of the central axis AX.

### Reference Signs List

1 LINEAR MOTION GUIDE DEVICE
2 GUIDE RAIL
3 SLIDER
4 ROLLING ELEMENT
5 ROLLING PASSAGE
6 RETURN PASSAGE
7 DIRECTION CHANGING PASSAGE
8 ROLLING GROOVE
9 ROLLING SURFACE
10 ROLLING GROOVE
11 ROLLING SURFACE
12 THROUGH HOLE
12A SUPPORT REGION
12B EXPOSED REGION
13 RETURN GUIDE MEMBER
14 OUTER SURFACE
15 INNER SURFACE
15A ARCUATE REGION
15B FIRST LINEAR REGION
15C SECOND LINEAR REGION
16 FIRST END SURFACE
17 SECOND END SURFACE
18 OPENING
31 SLIDER MAIN BODY
31B BODY
31F LEG
32 RETURN GUIDE
33 END CAP
33B BOLT
100 CIRCULATION PASSAGE
131 FIRST RETURN GUIDE MEMBER
132 SECOND RETURN GUIDE MEMBER
AX CENTRAL AXIS
P CONTACT POINT

## Claims

1. A linear motion guide device (1) comprising:
a guide rail (2);
a slider (3) that is guided by the guide rail (2) in a first axis direction; and
a rolling element (4) allowed to roll in a circulation passage including: a rolling passage (5) defined between the guide rail (2) and the slider (3); a return passage (6) provided inside the slider (3); and a direction changing passage (7) connecting the rolling passage (5) with the return passage (6),
wherein the return passage (6) includes: a through hole (12) extending in the first axis direction inside the slider (3); and a return guide member (13) disposed in the through hole (12), and
the return guide member (13) has, in a predetermined plane orthogonal to a central axis of the through hole (12): an outer surface (14) having an arc shape facing a part of an inner peripheral surface of the through hole (12); an inner surface (15) at least a part of which is in contact with the rolling element (4); a first end surface (16) connecting one end of the outer surface (14) with the inner surface (15) in a peripheral direction of the central axis; and a second end surface (17) connecting another end of the outer surface (14) with the inner surface (15) and separated from the first end surface (16),
**characterized in that**
the inner surface (15) has, in the predetermined plane: an arcuate region (15A); a first linear region (15B) connected to one end of the arcuate region (15A) in the peripheral direction of the central axis and extending in a tangential direction of the rolling element (4); and a second linear region (15C) connected to another end of the arcuate region (15A) and extending in the tangential direction of the rolling element (4).

2. The linear motion guide device (1) according to claim 1,
wherein the arcuate region (15A) has a curvature smaller than a curvature of the rolling element (4) in the predetermined plane.

3. The linear motion guide device (1) according to claim 2,
wherein a contact point between the rolling element (4) and the inner surface (15) is defined at at least one of a boundary between the arcuate region (15A) and the first linear region (15B) and a boundary between the arcuate region (15A) and the second linear region (15C).

4. The linear motion guide device (1) according to claim 2 or 3,
wherein the first linear region (15B) and the second linear region (15C) are parallel to each other in the predetermined plane.

5. The linear motion guide device (1) according to any one of claims 1 to 4,
wherein the rolling element (4) is in contact with the inner peripheral surface between the first end surface (16) and the second end surface (17).

6. The linear motion guide device (1) according to any one of claims 1 to 5,
wherein the outer surface (14) faces a support region defined in at least half of the inner peripheral surface in the peripheral direction of the central axis.

7. The linear motion guide device (1) according to any one of claims 1 to 6,
wherein the return passage (6) is provided outside the rolling passage (5) with respect to a center of the slider (3) in a second axis direction of the predetermined plane orthogonal to the first axis direction, and
an opening between the first end surface (16) and the second end surface (17) is disposed outside the central axis in the second axis direction.

8. The linear motion guide device (1) according to any one of claims 1 to 7,
wherein the return guide member (13) includes: a first return guide member (131); and a second return guide member (132) connected to one end of the first return guide member (131) in the first axis direction.

9. The linear motion guide device (1) according to any one of claims 1 to 8,
wherein the slider (3) includes: a slider main body provided with the through hole (12); an end cap connected to an end of the slider main body in the first axis direction; and a return guide disposed between the slider main body and the end cap so as to face the end cap,
wherein the direction changing passage (7) is defined between the end cap and the return guide, and
the return guide member (13) is integrated with at least one of the return guide and the end cap.

## Patentansprüche

1. Linearbewegungsführungsvorrichtung (1), umfassend:
eine Führungsschiene (2);
einen Schlitten (3), der von der Führungsschiene (2) in einer ersten Achsrichtung geführt wird; und
ein Rollelement (4), das in einem Umlaufkanal rollen kann, der Folgendes umfasst: einen Rollkanal (5), der zwischen der Führungsschiene (2) und dem Gleitstück (3) definiert ist; einen Rücklaufkanal (6), der innerhalb des Gleitstücks (3) vorgesehen ist; und einen Richtungswechselkanal (7), der den Rollkanal (5) mit dem Rücklaufkanal (6) verbindet,
wobei der Rücklaufkanal (6) umfasst: ein Durchgangsloch (12), das sich in der ersten Achsrichtung innerhalb des Gleitstücks (3) erstreckt; und ein Rückführungselement (13), das in dem Durchgangsloch (12) angeordnet ist, und
wobei das Rückführungsführungselement (13) in einer vorbestimmten Ebene orthogonal zu einer Mittelachse des Durchgangslochs (12) aufweist: eine Außenfläche (14) mit einer Bogenform, die einem Teil einer Innenumfangsfläche des Durchgangslochs (12) zugewandt ist; eine Innenfläche (15), von der mindestens ein Teil mit dem Rollelement (4) in Kontakt steht; eine erste Endfläche (16), die ein Ende der Außenfläche (14) mit der Innenfläche (15) in einer Umfangsrichtung der Mittelachse verbindet; und eine zweite Endfläche (17), die ein anderes Ende der Außenfläche (14) mit der Innenfläche (15) verbindet und von der ersten Endfläche (16) getrennt ist,
**dadurch gekennzeichnet, dass**
die Innenfläche (15) in der vorbestimmten Ebene aufweist: einen gekrümmten Bereich (15A); einen ersten linearen Bereich (15B), der mit einem Ende des gekrümmten Bereichs (15A) in Umfangsrichtung der Mittelachse verbunden ist und sich in Tangentialrichtung des Rollelements (4) erstreckt; und einen zweiten linearen Bereich (15C), der mit einem anderen Ende des gekrümmten Bereichs (15A) verbunden ist und sich in Tangentialrichtung des Rollelements (4) erstreckt.

2. Linearbewegungsführungsvorrichtung (1) gemäß Anspruch 1,
wobei der gekrümmte Bereich (15A) eine Krümmung aufweist, die kleiner ist als die Krümmung des Rollelements (4) in der vorbestimmten Ebene.

3. Linearbewegungsführungsvorrichtung (1) nach Anspruch 2,
wobei ein Kontaktpunkt zwischen dem Rollelement (4) und der Innenfläche (15) an mindestens einer Grenze zwischen dem gekrümmten Bereich (15A) und dem ersten linearen Bereich (15B) und einer Grenze zwischen dem gekrümmten Bereich (15A) und dem zweiten linearen Bereich (15C) definiert ist.

4. Linearbewegungsführungsvorrichtung (1) nach Anspruch 2 oder 3,
wobei der erste lineare Bereich (15B) und der zweite lineare Bereich (15C) in der vorbestimmten Ebene parallel zueinander sind.

5. Linearbewegungsführungsvorrichtung (1) nach einem der Ansprüche 1 bis 4,
wobei das Rollelement (4) mit der Innenumfangsfläche zwischen der ersten Endfläche (16) und der zweiten Endfläche (17) in Kontakt steht.

6. Linearbewegungsführungsvorrichtung (1) nach einem der Ansprüche 1 bis 5,
wobei die Außenfläche (14) einem Stützbereich zugewandt ist, der in mindestens der Hälfte der Innenumfangsfläche in Umfangsrichtung der Mittelachse definiert ist.

7. Linearbewegungsführungsvorrichtung (1) nach einem der Ansprüche 1 bis 6,
wobei der Rücklaufkanal (6) außerhalb des Rollkanals (5) in Bezug auf eine Mitte des Gleitstücks (3) in einer zweiten Achsenrichtung der vorbestimmten Ebene orthogonal zur ersten Achsenrichtung vorgesehen ist, und
eine Öffnung zwischen der ersten Endfläche (16) und der zweiten Endfläche (17) außerhalb der Mittelachse in der zweiten Achsrichtung angeordnet ist.

8. Linearbewegungsführungsvorrichtung (1) nach einem der Ansprüche 1 bis 7 v ,
wobei das Rückführungsführungselement (13) umfasst: ein erstes Rückführungsführungselement (131); und ein zweites Rückführungsführungselement (132), das mit einem Ende des ersten Rückftihrungsführungselements (131) in der ersten Achsrichtung verbunden ist.

9. Linearbewegungsführungsvorrichtung (1) nach einem der Ansprüche 1 bis 8,
wobei der Schieber (3) umfasst: einen Schieberhauptkörper, der mit dem Durchgangsloch (12) versehen ist; eine Endkappe, die mit einem Ende des Schieberhauptkörpers in der ersten Achsrichtung verbunden ist; und eine Rückführführung, die zwischen dem Schieberhauptkörper und der Endkappe so angeordnet ist, dass sie der Endkappe zugewandt ist,
wobei der Richtungsänderungskanal (7) zwischen der Endkappe und der Rückführführung definiert ist, und
das Rückführungsführungselement (13) mit mindestens einem der Elemente Rückführungsführung und Endkappe integriert ist.

## Revendications

1. Dispositif de guidage de déplacement linéaire (1) comprenant :
un rail de guidage (2),
un coulisseau (3) guidé par le rail de guidage (2) dans une première direction axiale, et
un élément roulant (4) autorisé à rouler dans un passage de circulation comprenant : un passage de roulement (5) défini entre le rail de guidage (2) et le coulisseau (3) ; un passage de retour (6) prévu à l'intérieur du coulisseau (3) ; et un passage de changement de direction (7) raccordant le passage de roulement (5) au passage de retour (6),
ledit passage de retour (6) comprenant : un trou traversant (12) s'étendant dans la première direction axiale à l'intérieur du coulisseau (3) ; et un élément de guidage de retour (13) disposé dans le trou traversant (12), et
l'élément de guidage de retour (13) présentant, dans un plan prédéterminé orthogonal à un axe central du trou traversant (12) : une surface extérieure (14) présentant une forme arquée faisant face à une partie d'une surface périphérique intérieure du trou traversant (12) ; une surface intérieure (15) dont au moins une partie est en contact avec l'élément roulant (4) ; une première surface terminale (16) raccordant une extrémité de la surface extérieure (14) à la surface intérieure (15) dans une direction périphérique de l'axe central ; et une deuxième surface terminale (17) raccordant une autre extrémité de la surface extérieure (14) à la surface intérieure (15) et séparée de la première surface terminale (16) ;
**caractérisé en ce que**
la surface intérieure (15) présente, dans le plan prédéterminé : une région arquée (15A) ; une première région rectiligne (15B) raccordée à une extrémité de la région arquée (15A) dans la direction périphérique de l'axe central et s'étendant dans une direction tangentielle de l'élément roulant (4) ; et une deuxième région rectiligne (15C) raccordée à une autre extrémité de la région arquée (15A) et s'étendant dans la direction tangentielle de l'élément roulant (4).

2. Dispositif de guidage de déplacement linéaire (1) selon la revendication 1,
dans lequel la région arquée (15A) présente une courbure inférieure à la courbure de l'élément roulant (4) dans le plan prédéterminé.

3. Dispositif de guidage de déplacement linéaire (1) selon la revendication 2,
dans lequel un point de contact entre l'élément roulant (4) et la surface intérieure (15) est défini au niveau d'une limite entre la région arquée (15A) et la première région rectiligne (15B) et/ou d'une limite entre la région arquée (15A) et la deuxième région rectiligne (15C).

4. Dispositif de guidage de déplacement linéaire (1) selon la revendication 2 ou 3,
dans lequel la première région rectiligne (15B) et la deuxième région rectiligne (15C) sont parallèles l'une à l'autre dans le plan prédéterminé.

5. Dispositif de guidage de déplacement linéaire (1) selon l'une quelconque des revendications 1 à 4,
dans lequel l'élément roulant (4) est en contact avec la surface périphérique intérieure entre la première surface terminale (16) et la deuxième surface terminale (17).

6. Dispositif de guidage de déplacement linéaire (1) selon l'une quelconque des revendications 1 à 5,
dans lequel la surface extérieure (14) fait face à une région de support définie dans au moins la moitié de la surface périphérique intérieure dans la direction périphérique de l'axe central.

7. Dispositif de guidage de déplacement linéaire (1) selon l'une quelconque des revendications 1 à 6,
dans lequel le passage de retour (6) est prévu d'un côté extérieur au passage de roulement (5) par rapport au centre du coulisseau (3) dans une deuxième direction axiale du plan prédéterminé orthogonale à la première direction axiale, et
une ouverture entre la première surface terminale (16) et la deuxième surface terminale (17) est disposée à l'extérieur de l'axe central dans la deuxième direction axiale.

8. Dispositif de guidage de déplacement linéaire (1) selon l'une quelconque des revendications 1 à 7,
dans lequel l'élément de guidage de retour (13) comprend : un premier élément de guidage de retour (131) ; et un deuxième élément de guidage de retour (132) raccordé à une extrémité du premier élément de guidage de retour (131) dans la première direction axiale.

9. Dispositif de guidage de déplacement linéaire (1) selon l'une quelconque des revendications 1 à 8,
dans lequel le coulisseau (3) comprend : un corps principal de coulisseau pourvu du trou traversant (12) ; un embout raccordé à une extrémité du corps principal de coulisseau dans la première direction axiale ; et un guide de retour disposé entre le corps principal de coulisseau et l'embout de façon à faire face à l'embout,
le passage de changement de direction (7) étant défini entre l'embout et le guide de retour, et
l'élément de guidage de retour (13) étant constitué d'un seul tenant avec le guide de retour et/ou l'embout.
